# EUROPÄISCHE PATENTANMELDUNG

(11) **EP 1 544 521 A1**
(43) Veröffentlichungstag der Anmeldung: **22.06.2005**
(21) Anmeldenummer: 04017950.9
(22) Anmeldetag: 29.07.2004
(51) Int. Cl.: F16J 15/32, F16J 15/56

(54) **Dichtring zur Abdichtung von Flüssigkeiten**

(30) Priorität: 19.12.2003 DE 10360601
(71) Anmelder: Carl Freudenberg KG, 69469 Weinheim (DE)
(72) Erfinder: Freitag, Edgar, 34613 Schwalmstadt (DE)

(57) **Zusammenfassung**

Dichtring zur Abdichtung von Flüssigkeiten, umfassend eine Dichtlippe (1), die durch einander kegelförmig durchschneidende erste und zweite Flankenflächen (2, 3) begrenzt ist, mit einem Kurvenzug, der die beiden Flankenflächen (2, 3) verbindet, wobei der Übergangsradius zumindest 0,3 mm beträgt.

## Beschreibung

### Technisches Gebiet

Die Erfindung betrifft einen Dichtring zur Abdichtung von Flüssigkeiten.

### Stand der Technik

Aus der DE 199 36 462 A1 ist ein Abstreifring bekannt, umfassend einen Stützkörper, an dem eine Abstreiflippe und eine dynamisch beanspruchte Dichtlippe zur Abdichtung von Flüssigkeit festgelegt sind, wobei die Abstreiflippe und die Dichtlippe einander mit axialem Abstand benachbart zugeordnet sind und wobei die Dichtlippe auf der dem abzudichtenden Raum zugewandten Seite der Abstreiflippe angeordnet ist. Die Abstreiflippe weist eine gerundet ausgebildete Abstreifkante und die Dichtlippe eine gerundet ausgebildete Dichtkante auf, wobei das Verhältnis aus Radius der Abstreifkante der Abstreiflippe zum Radius der Dichtkante der Dichtlippe 1,5 bis 2,5 beträgt und wobei der Radius der Dichtkante der Dichtlippe gemäß einer vorteilhaften Ausgestaltung 0,1 mm beträgt. Eine derart ausgebildete Dichtlippe ist insbesondere dann vorteilhaft, wenn eine höherviskose Flüssigkeit, beispielsweise Öl abgedichtet wird. Das vergleichsweise zähflüssige Öl bleibt auch dann als Schmierfilm für die Dichtlippe erhalten, wenn diese vergleichsweise scharfkantig ausgebildet ist; eine solche Dichtlippe durchschneidet das vergleichsweise zähflüssige Öl nicht und eine unmittelbare Berührung der Dichtlippe auf der abzudichtenden Oberfläche und daraus resultierender abrassiver Verschleiß werden zuverlässig vermieden.

### Darstellung der Erfindung

Der Erfindung liegt die Aufgabe zugrunde einen Dichtring der eingangs genannten Art derart weiterzuentwickeln, dass dieser bei Abdichtung niedrigviskoser Flüssigkeiten gleichbleibend gute Gebrauchseigenschaften während einer langen Gebrauchsdauer aufweist.

Diese Aufgabe wird erfindungsgemäß mit den Merkmalen der Ansprüche 1, 6, 7 und 8 gelöst. Auf vorteilhafte Ausgestaltungen / Weiterbildungen nehmen die darauf jeweils rückbezogenen Ansprüche Bezug.

Zur Lösung der Aufgabe ist ein Dichtring zur Abdichtung von Flüssigkeiten vorgesehen, umfassend eine Dichtlippe, die durch einander kegelförmig durchschneidende erste und zweite Flankenflächen begrenzt ist, mit einem Kurvenzug, der die beiden Flankenflächen verbindet, wobei der Übergangsradius zumindest 0,3 mm beträgt. Der Kurvenzug umfasst den Übergangsradius, wobei der Übergangsradius als Dichtlippenradius R ausgebildet ist und 0,4 mm bis 0,8 mm, weiter bevorzugt 0,6 mm beträgt. Der Kurvenzug kann beispielsweise durch eine Funktionhyperbel oder einen Bogen mit änderlichem Radius beschrieben werden, je nach Gegenlauffläche auf dem abzudichtenden Maschinenelement. Im Gegensatz zu einem Dichtlippenradius von z. B. 0,1 mm, der im eingangs genannten Stand der Technik offenbart ist, kann durch den deutlich vergrößerten Dichtlippenradius von zumindest 0,3 mm eine niedrigviskose Flüssigkeit, wie beispielsweise Klarwasser zuverlässig und während einer langen Gebrauchsdauer abgedichtet werden. Durch den Dichtlippenradius von zumindest 0,3 mm schwimmt die Dichtlippe auch bei Abdichtung einer niedrigviskosen Flüssigkeit auf und wird durch die niedrigviskose Flüssigkeit "geschmiert". Der, bezogen auf den Stand der Technik, wesentlich größere Dichtlippenradius verhindert, dass die Dichtlippe niedrigviskose, abzudichtende Flüssigkeiten durchschneidet und dadurch unmittelbar auf der abzudichtenden Oberfläche des abzudichtenden Maschinenelements aufliegt und deshalb einem unerwünscht hohen, abrassiven Verschleiß unterliegt und vorzeitig ausfällt.
Der beanspruchte Dichtring weist auch bei Abdichtung niedrigviskoser Flüssigkeiten, wie beispielsweise Klarwasser, sehr gute Gebrauchseigenschaften während einer langen Gebrauchsdauer auf.

Wäre der Dichtlippenradius kleiner als 0,3 mm, würde die Gefahr bestehen, dass die Dichtlippe das abzudichtende Medium durchschneidet/vollständig verdrängt und dadurch unmittelbar mit der abzudichtenden Oberfläche des abzudichtenden Maschinenelements in Berührung kommt und deshalb vorzeitig verschleißt; wäre der Dichtlippenradius demgegenüber größer als 0,8 mm, wären die Dichteigenschaften deutlich schlechter. Die Leckage wäre unerwünscht hoch.

Die Flankenflächen können einen ersten Winkel α von 100° bis 170°, bevorzugt 130° bis 150° einschließen. Derartige Winkel zwischen den Flankenflächen sind besonders vorteilhaft im Hinblick auf ein gutes Abdichtungsergebnis einerseits und einen geringen Verschleiß während einer langen Gebrauchsdauer andererseits.

Außerdem betrifft die Erfindung eine Dichtungsanordnung mit einem Dichtring, wobei nur die erste Flankenfläche mit abzudichtendem Medium beaufschlagbar ist, wobei die erste Flankenfläche mit einer abzudichtenden, translatorisch hinund herbewegbaren Oberfläche eines abzudichtenden Maschinenelements einen zweiten Winkel β einschließt, der größer ist als ein dritter Winkel γ, den die zweite, nicht medium-beaufschlagte Flankenfläche mit der abzudichtenden Oberfläche einschließt. Weil der zweite Winkel β größer als der dritte Winkel γ ist, wird das abzudichtende Medium zuverlässig innerhalb des abzudichtenden Raums zurückgehalten, und bei in Richtung des abzudichtenden Raums translatorisch einfahrendem, abzudichtendem Maschinenelement, wird der zur Schmierung der Dichtlippe benötigte dünne Film an abzudichtendem Medium, der sich auf der abzudichtenden Oberfläche befindet, wieder in Richtung des abzudichtenden Raums mitgenommen und nicht auf der dem abzudichtenden Raum abgewandten Seite in die Umgebung abgestreift.

Bei einer zweiseitigen Druckbeaufschlagung gelangt eine Dichtungsanordnung mit einem Dichtring zum Einsatz, wobei die Flankenflächen jeweils mit abzudichtendem Medium beaufschlagbar sind, wobei die Flankenfläche mit einer abzudichtenden, translatorisch hin- und herbewegbaren Oberfläche eines abzudichtenden Maschinenelements jeweils einen gleich großen zweiten β und dritten Winkel y einschließen. Für die wechselseitige Druckbeaufschlagung der beiden abzudichtenden Medien ist eine derartige Ausgestaltung vorteilhaft.

Der Dichtring und seine Dichtlippe bestehen bevorzugt aus einem gummielastischen Werkstoff, beispielsweise Gummi oder Polyurethan.

Der zuvor beschriebene Dichtring oder die zuvor beschriebene Dichtungsanordnung werden zur Abdichtung niedrigviskoser Flüssigkeiten insbesondere zur Abdichtung in Klarwasser-Hydraulik-Systemen verwendet. Wie zuvor bereits ausgeführt, sind die beschriebenen Parameter für derartige Verwendung besonders vorteilhaft.

### Kurzbeschreibung der Zeichnung

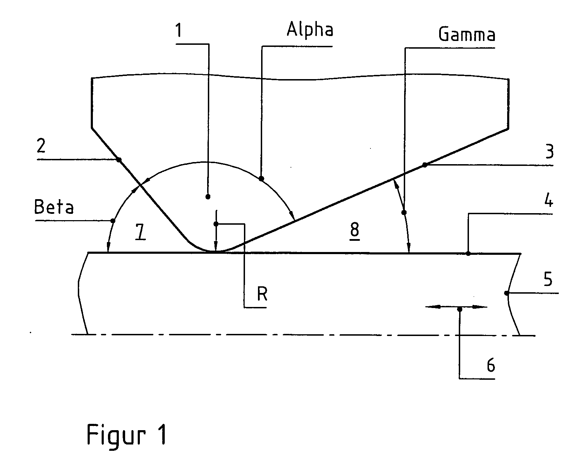

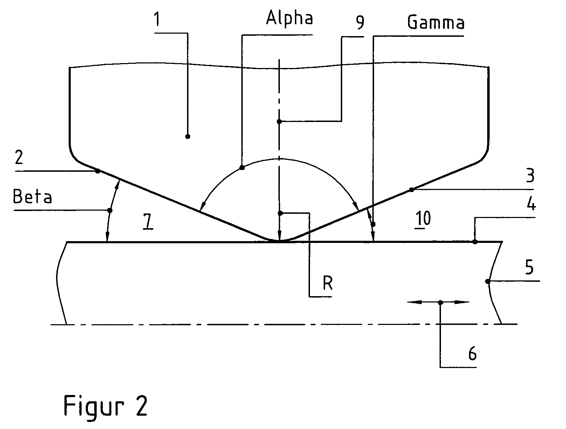

Zwei Ausführungsbeispiele einer erfindungsgemäßen Dichtungsanordnung, in denen jeweils ein erfindungsgemäßer Dichtring zur Anwendung gelangt, werden nachfolgend anhand der Figuren 1 und 2 näher beschrieben. Diese zeigen jeweils in schematischer Darstellung:
- Figur 1: Einen Ausschnitt einer Dichtungsanordnung, bei der der Dichtring einseitig medienbeaufschlagt ist,
- Figur 2: einen Ausschnitt aus einer Dichtungsanordnung, bei der der Dichtring zweiseitig medienbeaufschlagt ist.

### Ausführung der Erfindung

In Figur 1 ist ein erstes Ausführungsbeispiel einer Dichtungsanordnung gezeigt. Der Dichtring mit der Dichtlippe 1 ist in ein hier nicht dargestelltes Gehäuse eingepresst und umschließt mit der Dichtlippe 1 die abzudichtenden Oberfläche 4 eines abzudichtenden Maschinenelements 5, das hier durch eine Stange gebildet ist, umfangsseitig dichtend. Die Hin- und Herbeweglichkeit des abzudichtenden Maschinenelements 5 ist durch den Doppelpfeil 6 kenntlich gemacht.

Die Dichtlippe 1 umfasst zwei einander kegelförmig durchschneidende erste und zweite Flankenflächen 2, 3, wobei die Flankenflächen 2, 3 einen ersten Winkel α einschließen, der in diesem Ausführungsbeispiel 135° beträgt. Der Dichtlippenradius R, der die beiden Flankenflächen 2, 3 auf der dem abzudichtenden Maschinenelement 5 radial zugewandten Seite verbindet, beträgt in dem hier gezeigten Ausführungsbeispiel 0,6 mm.

Die erste Flankenfläche 2 begrenzt den abzudichtenden Raum 7, der mit einer niedrigviskosen Flüssigkeit, beispielsweise mit Klarwasser gefüllt ist. Der zweite Winkel β, den die erste Flankenfläche 2 mit der Oberfläche 4 des abzudichtenden Maschinenelements einschließt, beträgt im hier gezeigten Ausführungsbeispiel etwa 30°. Der zweite Winkel β ist größer, als der dritte Winkel γ, den die zweite, nicht mediumbeaufschlagte Flankenfläche 3, die in der Umgebung 8 angeordnet ist, mit der abzudichtenden Oberfläche 4 einschließt. Der dritte Winkel γ beträgt etwa 15°.

In Figur 2 ist ein zweites Ausführungsbeispiel einer Dichtungsanordnung gezeigt, wobei der Dichtring in einem hier nicht dargestellten Kolben angeordnet ist und radial außen abdichtet. Die abzudichtende Oberfläche 4 ist Bestandteil des abzudichtenden Maschinenelements 5, das in diesem Ausführungsbeispiel durch die Innenwand eines Gehäuses gebildet ist. Bezogen auf die Dichtlippe 1 bewegt sich das abzudichtende Maschinenelement 5 in Richtung des Doppelpfeils 6 translatorisch hin und her.

Im Gegensatz zum Ausführungsbeispiel aus Figur 1, ist die Dichtlippe 1 um eine gedachte Radialebene 9 symmetrisch ausgebildet. Auch in diesem Ausführungsbeispiel beträgt der erste Winkel α, den die beiden Flankenflächen 2, 3 miteinander einschließen, etwa 135°. Folglich betragen die zweiten und dritten Winkel β und γ jeweils etwa 22,5°. Nicht nur im ersten abzudichtenden Raum 7, sondern auch im zweiten abzudichtenden Raum 10 befindet sich jeweils als abzudichtendes Medium eine niedrigviskose Flüssigkeit, wie beispielsweise Klarwasser.

In den Figuren 1 und 2 besteht die Dichtlippe 1 jeweils aus einem gummielastischen Dichtungs-Werkstoff.

Die Viskosität η einer niedrigviskosen Flüssigkeit, beispielsweise von Klarwasser, beträgt bei 20°C 1x 10⁻³ Ns/m².

## Patentansprüche

1. Dichtring zur Abdichtung von Flüssigkeiten, umfassend eine Dichtlippe (1), die durch einander kegelförmig durchschneidende erste und zweite Flankenflächen (2, 3) begrenzt ist, mit einem Kurvenzug, der die beiden Flankenflächen (2, 3) verbindet, wobei der Übergangsradius zumindest 0,3 mm beträgt.

2. Dichtring nach Anspruch 1, **dadurch gekennzeichnet, dass** der Kurvenzug den Übergangsradium umfasst, der als Dichtlippenradius R ausgebildet ist und 0,4 bis 0,8 mm beträgt.

3. Dichtring nach einem der Ansprüche 1 oder 2, **dadurch gekennzeichnet, dass** der Dichtlippenradius R 0,6 mm beträgt.

4. Dichtring nach einem der Ansprüche 1 bis 3, **dadurch gekennzeichnet, dass** die Flankenflächen (2, 3) einen ersten Winkel α von 100° bis 170° einschließen.

5. Dichtring nach Anspruch 4, **dadurch gekennzeichnet, dass** der erste Winkel α 130° bis 150° beträgt.

6. Dichtungsanordnung mit einem Dichtring gemäß einem der Ansprüche 1 bis 5, **dadurch gekennzeichnet, dass** nur die erste Flankenfläche (2) mit abzudichtendem Medium beaufschlagbar ist, wobei die erste Flankenfläche (2) mit einer abzudichtenden, translatorisch hin- und herbewegbaren Oberfläche (4) eines abzudichtenden Maschinenelements (5) einen zweiten Winkel β einschließt, der größer ist als ein dritter Winkel γ, den die zweite, nicht-mediumbeaufschlagte Flankenfläche (3) mit der abzudichtenden Oberfläche (4) einschließt.

7. Dichtungsanordnung mit einem Dichtring gemäß einem der Ansprüche 1 bis 5, **dadurch gekennzeichnet, dass** beide Flankenflächen (2, 3) jeweils mit abzudichtendem Medium beaufschlagbar sind, wobei die Flankenflächen (2, 3) mit einer abzudichtenden, translatorisch hin- und herbewegbaren Oberfläche (4) eines abzudichtenden Maschinenelements (5) jeweils einen gleich großen zweiten β und dritten Winkel γ einschließen.

8. Verwendung eines Dichtrings oder einer Dichtungsanordnung gemäß einem der Ansprüche 1 bis 7, zur Abdichtung niedrigviskoser Flüssigkeiten.

9. Verwendung eines Dichtrings oder einer Dichtungsanordnung nach Anspruch 8, zur Abdichtung von Klarwasser-Hydraulik-Systemen.
